# EUROPÄISCHE PATENTSCHRIFT

(11) **EP 0 553 936 B1**
(45) Veröffentlichungstag und Bekanntmachung des Hinweises auf die Patenterteilung: **14.10.1998**
(21) Anmeldenummer: 93200676.0
(22) Anmeldetag: 09.03.1993
(51) Int. Cl.: F16L 39/00, F16L 9/18

(54) **Verfahren zur Bildung eines Rohrsystems und so gebildetes Rohrsystem**
Method for establishing a pipeline system and pipeline system according to this method
Méthode pour former un système de tuyauterie et tuyauterie selon cette méthode

(43) Veröffentlichungstag der Anmeldung: 04.08.1993
(73) Patentinhaber: COX GEELEN B.V., NL-6245 HZ Eijsden (NL)
(72) Erfinder: van Toor, Wouter, NL-6245 GS Eijsden (NL)
(74) Vertreter: Bartelds, Erik

(56) Entgegenhaltungen:
- EP-A- 0 156 711
- WO-A-90/06469
- DE-B- 1 452 473
- US-A- 2 714 395
- US-A- 4 607 665

## Beschreibung

Die Erfindung betrifft ein Verfahren zur Bildung eines Rohrsystems, indem mit gegenseitigem Zwischenraum in einem äußeren Rohr ein inneres Rohr angebracht wird und indem zwischen den beiden Rohren in der Längsrichtung der Rohre wenigstens ein draht- oder stabförmiges, federndes Verbindungsorgan umfassende durchlässige Verbindungsmittel angebracht werden. Ein solches Verfahren ist aus US-A-4 607 665 bereits bekannt, und wird namentlich für die Herstellung doppelwandiger Abfuhrkanäle für beispielsweise Heizungsanlagen angewandt, wobei der Raum zwischen dem inneren Rohr und dem äußeren Rohr zum Kühlen und Isolieren des Innenrohrs verwendet wird.

Bei einem klassischen Verfahren zur Bildung eines doppelwandiges Rohrsystems wurde zwischen den Rohren eine Reihe von Abstandsorganen angebracht, die beispielsweise mittels Punktschweißen oder durch Schrauben an den beiden Rohren befestigt wurden. Auch war ein verfahren bekannt, bei der ein schmaler Streifen Plattenmaterial zu einem gewellten Ring gefalzt wurde, der zwischen die beiden Rohre eingesetzt werden konnte und an denen ebenfalls mittels Punktschweißen oder durch Schrauben befestigt werden konnte.

Diese beiden klassischen Verfahren hatten eine Reihe von Nachteilen. Erstens war die Befestigung der Abstandsorgane oder des gewellten Rings eine arbeitsintensive und zeitaufwendige Beschäftigung. Darüber hinaus mussten bei den bekannten Befestigungsverfahren, wenn Schrauben, Nieten und dergleichen verwendet wurden, die Rohre durchbohrt werden, wodurch Lecks eintreten konnten. Schließlich erforderte eine Verbindung durch den aus Plattenmaterial gefalzten, gewellten Ring relativ viel Material und sperrte er einen relativ großen Teil des Raums zwischen den Innen- und dem Außenrohr. Letztere Nachteile spielten namentlich dann eine Rolle, wenn der Raum zwischen den Rohren nicht nur als Isolationsraum, sondern als Ansaugkanal für in einem Heizungsgerät zu verbrennende Luft benutzt wurde.

Diese Nachteile werden von dem in der obenerwähnten Druckschrift US-A-4 607 665 beschriebenen Verfahren schon weitgehend beseitigt, indem zur Verbindung einen Drahtfeder verwendet wird, wodurch die vorstehend beschriebenen Befestigungsbearbeitungen entfallen, was zu großen Einsparungen bei der Installation führt. Dieser Drahtfeder wird dabei von einer Vielzahl von zu einem geschlossenen Dreieck verschweissten Stäbchen gebildet, und weist an jeder Dreiecksseite eine senkrecht abstehende Zunge auf, die mit der Hauptebene des Dreieckfeders einen stumpfen Winkel einschliesst. Der Drahtfeder wird um das Innenrohr und in das Aussenrohr geschoben indem die drei Ecken aufeinander zugedrückt werden, wobei die Dreiecksseiten ausgebogen werden, und indem die Zungen so weggebogen werden, daß sich der Winkel zwischen den Zungen und der Hauptebene des Drahtfeders verringert.

Die Erfindung bezweckt nun die Verschaffung eines vereinfachten Verfahrens zur Herstellung eines Rohrsystems im vorstehend beschriebenen Sinne. Dies wird nach der Erfindung dadurch erreicht, daß das Verbindungsorgan eine offene Form mit voneinander fernliegenden freien Enden aufweist, und durch Aufbiegen, bzw. Zusammenkneifen seiner freien Enden um das innere Rohr und in das äußere Rohr angebracht wird.

Vorzugsweise angewandte Varianten des Verfahrens nach der Erfindung sind in den Unteransprüchen 2-4 beschrieben.

Die Erfindung betrifft ebenfalls ein mit dem Verfahren nach der Erfindung hergestelltes Rohrsystem, mit wenigstens einem inneren Rohr, wenigstens einem das innere Rohr umgebenden, damit im wesentlichen parallel verlaufenden äußeren Rohr und mit den Rohren zusammenwirkenden, in deren Längsrichtung durchlässigen Mitteln zum Verbinden der Rohre miteinander unter Freilassung eines Zwischenraums, welche Verbindungsmittel wenigstens ein draht- oder stabförmiges im wesentlichen flaches, federndes Verbindungsorgan umfassen, welches Rohrsystem dadurch gekennzeichnet ist, daß das Verbindungsorgan eine offene Form mit voneinander fernliegenden freien Enden aufweist.

Vorzugsausführungsformen des Rohrsystems nach der Erfindung sind in den Unteransprüchen 6-11 beschrieben.

Schließlich betrifft die Erfindung noch ein Verbindungsorgan zur Anwendung im vorstehend beschriebenen Rohrsystem.

Die Erfindung wird nun anhand einer Reihe von Beispielen erläutert, wobei auf die beigefügte Zeichnung verwiesen wird, in der entsprechende Teile mit entsprechenden Verweisziffern versehen sind, und worin:
Figur 1 eine teilweise geschnittene Seitenansicht eines erfindungsgemäßen Rohrsystems ist;
Figur 2 ein Querschnitt nach der Linie II-II in Figur 1 ist;
Figur 3 ein Längsschnitt nach der Linie III-III in Figur 2 ist;
Figur 4 eine perspektivische Ansicht des federnden Verbindungsorgans nach dem Pfeil IV in Figur 3 ist;
Figur 5 eine mit Figur 4 übereinstimmende Ansicht einer alternativen Ausführungsform des Verbindungsorgans ist;
Figur 6 eine mit Figuren 4 und 5 übereinstimmende Ansicht einer dritten Ausführungsform des federnden Verbindungsorgans ist, mit dazu gezeigten Teilen des Innen- und des Außenrohrs;

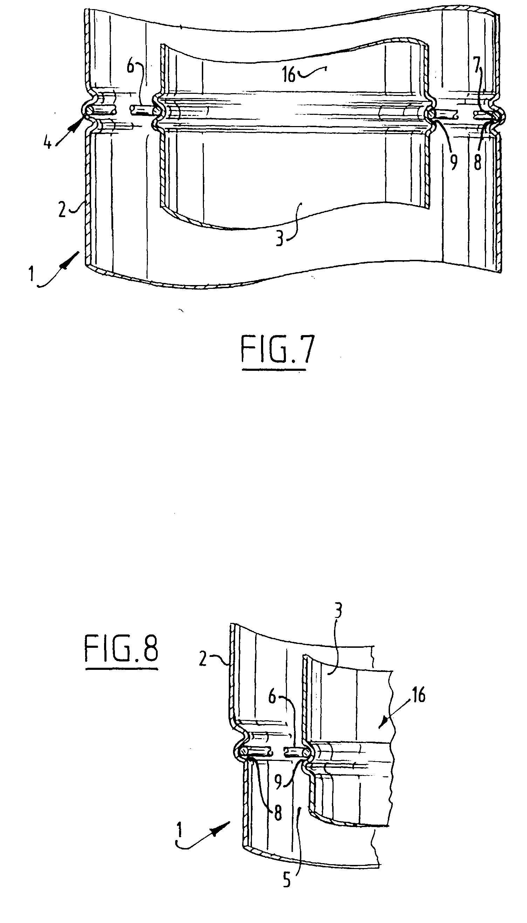

Figur 7 ein Längsschnitt einer zweiten Ausführungsform des Rohrsystems nach der Erfindung ist, und
Figur 8 ein Längsschnitt eines Teils einer dritten Ausführungsform des erfindungsgemäßen Rohrsystems ist.

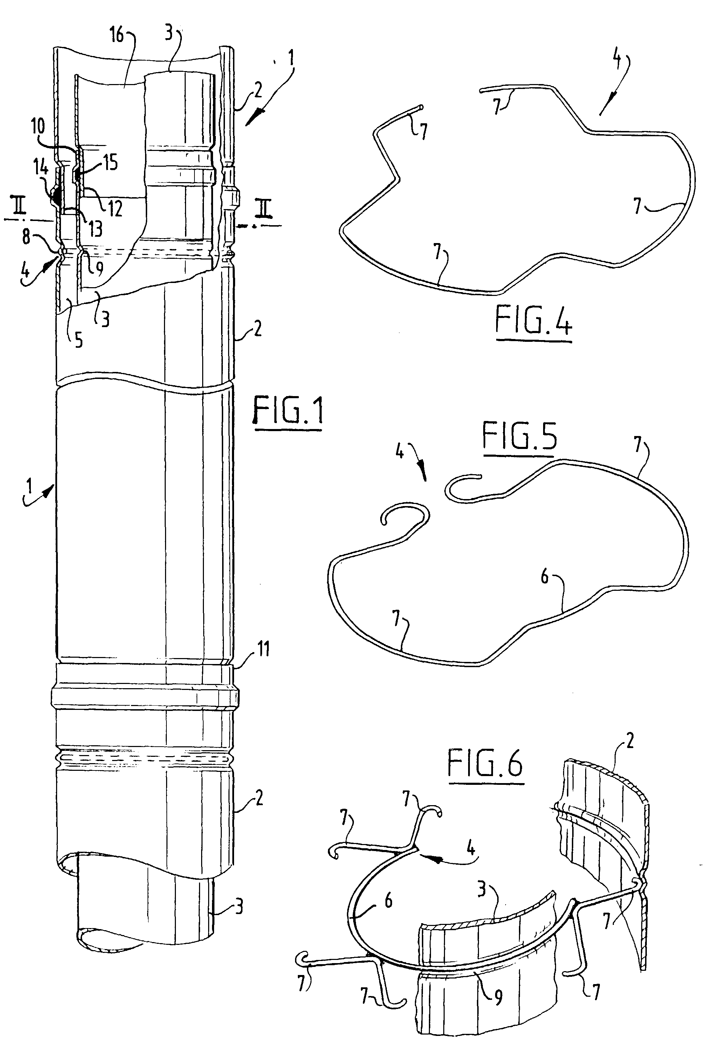

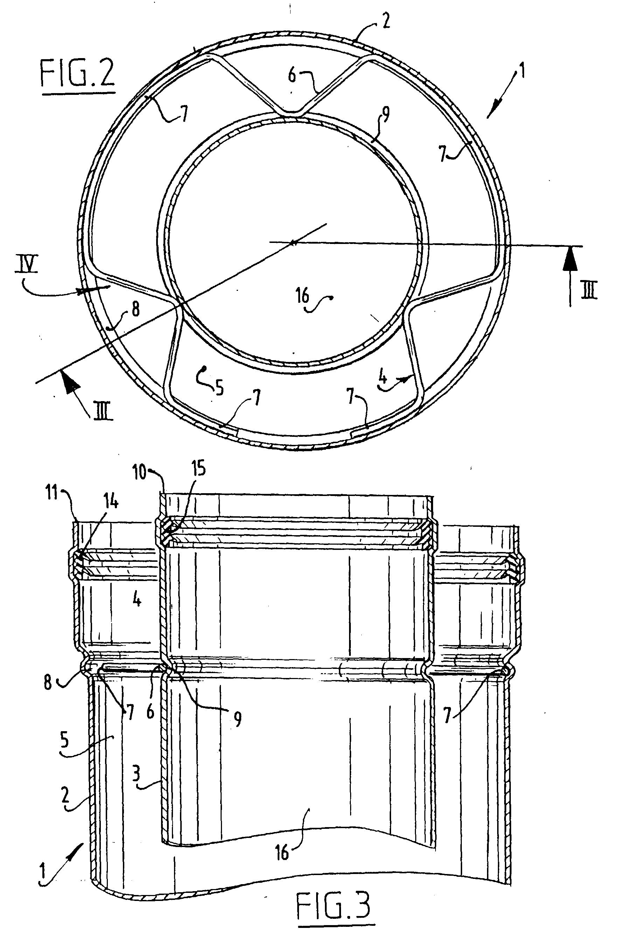

Ein Rohrsystem 1 (Figur 1) umfaßt eine Reihe gegenseitig verbundener Rohre 2 und eine Reihe von darin angebrachten, ebenfalls miteinander verbundenen inneren Rohren 3, die einen Abfuhrkanal 16 für beispielsweise Rauchgase bilden. Zwischen den inneren Rohren 3 und den äußeren Rohren 2 ist ein Raum 5 freigelassen, der beispielsweise als Ansaugkanal für zu verbrennenden Luft dienen kann. Zwischen den miteinander verbundenen Rohrteilen sind Dichtungen 14, 15 angebracht, um die Kanäle 5, 16 gasdicht zu machen. Die Innenrohre 3 sind sowohl in der Längsrichtung als auch in der Querrichtung in äußeren Rohren 2 durch Verbindungsmittel 4 fixiert.

Die Verbindungsmittel 4 umfassen wenigstens ein federndes Verbindungsorgan 6, das das Innenrohr 3 wenigstens über einen Teil seines Umfangs eng umschließt und das mit federnden biegsamen Teilen 7 versehen ist, die sich von dem Innenrohr 3 aus im wesentlichen radial über den Zwischenraum 5 erstrecken und an dem Außenrohr 2 angreifen. Um das Innenrohr 3 und das Außenrohr 2 in der Längsrichtung gegenseitig zu fixieren, kann das federnde Verbindungsorgan 6 in Umfangsnute 8, 9 aufgenommen sein, die in den beiden Rohren angebracht sind. Es ist jedoch auch vorstellbar, ein Verbindungsorgan 6 in anderer Weise zu fixieren, beispielsweise indem an der Innenwand des Außenrohrs 2 und auf der Außenwand des Innenrohrs 3 Klemmen oder Nocken angebracht werden oder indem Teile dieser Flächen griffig gemacht werden, in der Kombination mit einer relativ große Federkraft des Verbindungsorgans 6.

Das federnde Verbindungsorgan 6 kann einstückig ausgebildet sein, beispielsweise gebogen aus einem Metallstab oder gegossen oder gepreßt aus Kunststoff (Figur 2, 4, 5), kann aber auch aus verschiedenen Teilen zusammengesetzt sein (Figur 6). Die genaue Form des Verbindungsorgans 6 ist von untergeordneter Bedeutung, wichtig ist jedoch, daß die Form offen ist, so daß das Verbindungsorgan voneinander fernliegenden freien Enden aufweist. Dabei sollte selbstverständlich die Form so gewählt werden, daß das Innenrohr 3 in dem Außenrohr 2 fixiert wird, sowohl in der radialen als auch in der axialen Richtung, und daß der durch den Zwischenraum 5 gebildete Kanal so wenig wie möglich von dem Organ 6 gesperrt wird. Besonders geeignet ist eine Ω-Form, die ein als ein ganzes gebildetes Verbindungsorgan 6 bietet, das sich einfach handhaben, namentlich aufbiegen und zusammendrücken läßt, und das eine gute Klemmwirkung um das Innenrohr 3 und in dem Außenrohr 2 ermöglicht.

Das Rohrsystem 1 kann gebildet werden, indem zuerst das Federorgan 6 ein wenig aufgebogen wird und es um das Innenrohr 3 geschoben wird, in die darin angebrachte Umfangsnut 9, und danach das Innenrohr 3 und das Federorgan 6 in das Außenrohr 2 geschoben wird, wobei das Federorgan 6 durch das Aufeinander zubewegen seiner freien Enden zusammengekniffen wird, bis es in die Nut 8 fällt. Es ist jedoch auch möglich, das Federorgan 6 zunächst in das Außenrohr 2 einzusetzen und danach das Innenrohr 3 durch die Feder 6 hindurchzuschieben. Dabei muß die Feder 6 dann geöffnet gehalten werden, was etwas mehr Anstrengung als das Zusammendrücken der Feder erfordern wird. Wenn mehr als ein Federorgan 6 angebracht wird, kann ein erstes Federorgan auf die vorstehend beschriebene Weise angebracht werden, wonach ein zweites Federorgan 6 zwischen den in dieser Weise bereits fixierten Rohren 2, 3 geschoben und eingeklemmt werden kann.

Die gewählte Form der Feder ermöglicht es, das Innenrohr 3 in sicherer Weise in dem Außenrohr zu befestigen, sogar wenn der Zwischenraum relativ groß ist, beispielsweise wenn der Durchmesser des Außenrohres 2 um das Anderthalb- oder Zweifache größer als der des Innenrohrs 3 ist. In der Kombination mit dem geringen Widerstand in der Längsrichtung der Rohre ist dadurch das Verbindungsorgan 6 schlechthin geeignet für die Anwendung in den Situation, in denen in dem Zwischenraum eine relativ große Menge Gas, beispielsweise zu verbrennende Luft, befördert werden muß. Weil das Verbindungsorgan 6 außerdem in Nuten 8, 9 eingefaßt wird, kann mit einem einzigen Verbindungsorgan 6 sowohl radiale als auch axiale Fixierung des Innenrohrs 3 in dem Außenrohr 2 bewirkt werden. Dadurch bleibt das Innenrohr 3 noch einigermaßen schwenkbar in dem Außenrohr 2, wodurch das Innenrohr einigermaßen ausgerichtet werden kann, und das Verbinden mit einem nachfolgenden Rohrteil somit stark vereinfacht wird.
Durch den federnden Charakter des Verbindungsorgans 6 können außerdem Expansionsunterschied zwischen den Rohren 2, 3 bedingt durch Temperaturunterschiede zwischen den sich darin befindenden gasen (warmen Rauchgasen im Abzugskanal 16 und kühle Luft in dem Ansaugkanal 5) einfach abgefangen werden.
Obwohl in allen Beispielen nur ein Rohrensystem mit zwei Kanälen gezeigt ist, kann das System selbstverständlich erweitert werden, indem um das Außenrohr 2 noch in drittes Rohr angebracht wird, das ebenfalls mittels erfindungsgemäßer Verbindungsorgane befestigt sein kann.

## Patentansprüche

1. Verfahren zur Bildung eines Rohrsystems (1), indem mit gegenseitigem Zwischenraum (5) in einem äußeren Rohr (2) ein inneres Rohr (3) angebracht wird und indem zwischen den beiden Rohren (2, 3) in der Längsrichtung der Rohre (2, 3) wenigstens ein draht- oder stabförmiges, federndes Verbindungsorgan (6) umfassende durchlässige Verbindungsmittel (4) angebracht werden, **dadurch gekennzeichnet,** daß das Verbindungsorgan (6) eine offene Form mit voneinander fernliegenden freien Enden aufweist, und durch Aufbiegen, bzw. Zusammenkneifen seiner freien Enden um das innere Rohr (3) und in das äußere Rohr (2) angebracht wird.

2. Verfahren nach Anspruch 1, **dadurch gekennzeichnet**, daß das federnde Verbindungsorgan (6) in bezug auf jedes der Rohre (2, 3) in der Längsrichtung fixiert wird.

3. Verfahren nach Anspruch 2, **dadurch gekennzeichnet,** daß vor dem ineinander Anbringen der Rohre (2, 3) in jedem von ihnen über wenigstens einen Teil seines Umfangs eine Aussparung (8, 9) gebildet wird, in die das federnde Verbindungsorgan (6) daraufhin hineingedrückt werden.

4. Verfahren nach einem der Ansprüche 1-3, **dadurch gekennzeichnet**, daß das federnde Verbindungsorgan (6) zunächst um das Innenrohr (3) geklemmt wird, wonach das Innenrohr (3) daraufhin zusammen mit dem Verbindungsorgan (6) in das Außenrohr (2) hineingeschoben und darin festgeklemmt wird.

5. Rohrsystem (1) mit wenigstens einem inneren Rohr (3), wenigstens einem das innere Rohr (3) umgebenden, damit im wesentlichen parallel verlaufenden äußeren Rohr (2) und mit den Rohren (2, 3) zusammenwirkenden, in deren Längsrichtung durchlässigen Mitteln (4) zum Verbinden der Rohre miteinander unter Freilassung eines Zwischenraums (5), welche Verbindungsmittel (4) wenigstens ein draht- oder stabförmiges, im wesentlichen flaches, federndes Verbindungsorgan (6) umfassen, **dadurch gekennzeichnet,** daß das Verbindungsorgan (6) eine offene Form mit voneinander fernliegenden freien Enden aufweist.

6. Rohrsystem (1) nach Anspruch 5, **dadurch gekennzeichnet,** daß das Verbindungsorgan (6) das Innenrohr (3) wenigstens teilweise eng umschließt und mit im wesentlichen quer zur Längsrichtung des Rohrs (3) herausragenden den Zwischenraum (5) überbrückenden federnd biegbaren Angriffsteilen (7) versehen ist.

7. Rohrsystem (1) nach Anspruch 6, **dadurch gekennzeichnet,** daß das Verbindungsorgan (6) eine im wesentlichen Ω-förmige Feder ist.

8. Rohrsystem (1) nach einem der Ansprüche 5-7, **dadurch gekennzeichnet,** daß jedes Rohr (2, 3) Mittel aufweist, um das Verbindungsorgan (6) in dessen Längsrichtung zu fixieren.

9. Rohrsystem (1) nach Anspruch 8, **dadurch gekennzeichnet,** daß die Fixierungsmittel von in den Rohren (2, 3) über wenigsten einen Teil ihres Umfangs angebrachten, die Verbindungsmittel (4) aufnehmenden Aussparungen (8, 9) gebildet werden.

10. Rohrsystem (1) nach einem der Ansprüche 5-9, **dadurch gekennzeichnet,** daß der Durchmesser des Außenrohres (2) anderthalb bis zwei mal größer ist als der Durchmesser des Innenrohres (3).

11. Rohrsystem (1) nach einem der Ansprüche 5-10, **dadurch gekennzeichnet,** daß das Innenrohr (3) Teil eines Abfuhrkanals (16) für Rauchgase und das Außenrohr (2) Teil eines Ansaugkanals (5) für zu verbrennenden Luft bildet.

12. Draht- oder stabförmiges, im wesentlichen flaches, federndes Verbindungsorgan (6), das eine offene Form mit voneinander fernliegenden freien Enden aufweist und offensichtlich für die Anwendung in einem Rohrsystem nach einem der Ansprüche 5-11 bestimmt ist.

## Claims

1. Method of forming a pipe system by placing an inner pipe (3) with a mutual gap (5) in an outer pipe (2) and by placing permeable connecting means (4) including at least one wire-like or rod-like spring connecting member (6) between the two pipes (2, 3) in the longitudinal direction of the pipes (2, 3), characterised in that the connecting member (6) has an open shape with free ends remote from each other, and by bending open or pinching together its free ends is placed around the inner pipe (3) and in the outer pipe (2).

2. Method according to claim 1, characterised in that the spring connecting member (6) is fixed in the longitudinal direction in relation to each of the pipes (2, 3).

3. Method according to claim 2, characterised in that before placing the pipes (2, 3) one inside the other, in each of them over at least part of its circumference is formed a recess (8, 9) into which the spring connecting member (6) is then pressed.

4. Method according to any of claims 1-3, characterised in that the spring connecting member (6) is first clamped around the inner pipe (3), then the inner pipe (3) together with the connecting member (6) is inserted in the outer pipe (2) and clamped fast therein.

5. Pipe system (1) with at least one inner pipe (3), at least one outer pipe (2) surrounding the inner pipe (3) and therefore running essentially parallel, and means (4) cooperating with the pipes (2, 3) and permeable in the longitudinal direction thereof for connection of the pipes to each other, leaving a gap (5) free, which connecting means (4) include at least one wire-like or rod-like essentially flat spring connecting member (6), characterised in that the connecting member (6) has an open shape with free ends remote from each other.

6. Pipe system (1) according to claim 5, characterised in that the connecting member (6) at least partially closely surrounds the inner pipe (3) and is provided with resiliently bendable engaging portions (7) protruding essentially transversely to the longitudinal direction of the pipe (3) and bridging the gap (5).

7. Pipe system (1) according to claim 6, characterised in that the connecting member (6) is an essentially Ω-shaped spring.

8. Pipe system (1) according to any of claims 5-7, characterised in that each pipe (2, 3) comprises means for fixing the connecting member (6) in the longitudinal direction thereof.

9. Pipe system (1) according to claim 8, characterised in that the fixing means are formed by recesses (8, 9) formed in the pipes (2, 3) over at least part of their circumference and receiving the connecting means (4).

10. Pipe system (1) according to any of claims 5-9, characterised in that the diameter of the outer pipe (2) is one and a half to two times larger than the diameter of the inner pipe (3).

11. Pipe system (1) according to any of claims 5-10, characterised in that the inner pipe (3) forms part of an outlet channel (16) for flue gases and the outer pipe (2) forms part of an inlet channel (5) for air to be burned.

12. Wire-like or rod-like essentially flat spring connecting member (6) which has an open shape with free ends remote from each other and is clearly designed for use in a pipe system according to any of claims 5-1.

## Revendications

1. Procédé destiné à former un système de tuyauterie (1) dans lequel un tube intérieur (3) est inséré avec un espace intermédiaire mutuel (5) dans un tube extérieur (2), et dans lequel des moyens de liaison perméables (4), comportant au moins un organe de liaison élastique (6) en forme de fil ou de barre, sont disposés entre les deux tubes (2, 3) dans la direction longitudinale des tubes (2, 3), caractérisé en ce que l'organe de liaison (6) a une forme ouverte avec des extrémités libres écartées l'une de l'autre, et est placé autour du tube intérieur (3) et inséré dans le tube extérieur (2) en dépliant ou en comprimant ses extrémités libres.

2. Procédé selon la revendication 1, caractérisé en ce que l'organe de liaison élastique (6) est fixé dans le sens longitudinal par rapport à chacun des tubes (2, 3).

3. Procédé selon la revendication 2, caractérisé en ce que, avant l'insertion des tubes (2, 3) l'un dans l'autre, un évidement (8, 9) est pratiqué dans chacun d'entre eux, au moins sur une partie de leur circonférence, dans lequel l'organe de liaison élastique (6) est ensuite inséré par poussée.

4. Procédé selon l'une quelconque des revendications 1 à 3, caractérisé en ce que l'organe de liaison élastique (6) est dans un premier temps enserré autour du tube intérieur (3), le tube intérieur (3) en l'organe de liaison (6) étant ensuite insérés et bloqués dans le tube extérieur (2).

5. Système de tuyauterie (1) comportant au moins un tube intérieur (3), au moins un tube extérieur (2) sensiblement parallèle entourant le tube intérieur (3), et des moyens (4) agissant conjointement avec les tubes (2, 3), qui sont perméables dans le sens longitudinal de ces derniers, qui sont destinés à relier les tubes entre eux en laissant libre un espace intermédiaire (5), lesquels moyens de liaison (4) comportent au moins un organe de liaison élastique (6) en forme de fil ou de barre sensiblement plat, caractérisé en ce que l'organe de liaison (6) a une forme ouverte avec des extrémités libres écartées l'une de l'autre.

6. Système de tuyauterie (1) selon la revendication 5, caractérisé en ce que l'organe de liaison (6) enserre étroitement le tube intérieur (3), au moins partiellement, et est muni d'éléments d'appui (7) élastiques et souples s'étendant pour l'essentiel transversalement par rapport à la direction longitudinale du tube (3) et qui pontent l'espace intermédiaire (5).

7. Système de tuyauterie (1) selon la revendication 6, caractérisé en ce que l'organe de liaison (6) est un ressort ayant sensiblement la forme d'un Ω.

8. Système de tuyauterie (1) selon l'une quelconque des revendications 5 à 7, caractérisé en ce que chaque tube (2, 3) comporte des moyens pour fixer l'organe de liaison (6) dans sa direction longitudinale.

9. Système de tuyauterie (1) selon la revendication 8, caractérisé en ce que les moyens de fixation sont formés par des évidements (8, 9) qui sont pratiqués dans les tubes (2, 3), au moins sur une partie de leur circonférence, dans lesquels sont logés les moyens de liaison (4).

10. Système de tuyauterie (1) selon l'une quelconque des revendications 5 à 9, caractérisé en ce que le diamètre du tube extérieur (2) est une fois et demie à deux fois supérieur au diamètre du tube intérieur (3).

11. Système de tuyauterie (1) selon l'une quelconque des revendications 5 à 10, caractérisé en ce que le tube intérieur (3) forme une partie d'un conduit d'évacuation (16) de gaz de fumée, et en ce que le tube extérieur (2) forme une partie d'un conduit d'aspiration (5) d'air devant être brûlé.

12. Organe de liaison élastique (6) en forme de fil ou de barre sensiblement plat, ayant une forme ouverte avec des extrémités libres écartées l'une de l'autre, et destiné évidemment à être mis en oeuvre dans un système de tuyauterie selon l'une quelconque des revendications 5 à 11.
